# EUROPEAN PATENT APPLICATION

(11) **EP 3 664 239 A1**
(43) Date of publication of application: **10.06.2020**
(21) Application number: 18211124.5
(22) Date of filing: 07.12.2018
(51) Int. Cl.: H02H 1/00, H02H 3/02, H02H 7/122

(54) **METHODS OF CONTROLLING AN ELECTRICAL SYSTEM TO EXTINGUISH AN ELECTRIC ARC, AND ELECTRICAL SYSTEMS**

(71) Applicant: GE Energy Power Conversion Technology Ltd., Warwickshire CV21 1BU (GB)
(72) Inventor: GLOES, Hendrik, 12277 Berlin (DE); GESKE, Martin, 12277 Berlin (DE); BRÜCKNER, Thomas, 12277 Berlin (DE)
(74) Representative: Serjeants LLP

(57) **Abstract**

An electrical system forming part of a solar power plant (1) is described. The electrical system includes a plurality of photovoltaic (PV) panels (8), a power converter (2), and a controller (54). In response to a detected electric arc on the DC side of the power converter (2), the controller (54) is configured to enable a short circuit state of the power converter by controlling semiconductor switches of the power converter (e.g., turning on some or all of the semiconductor switches) to create a short circuit between DC input terminals (4) of the power converter. The short circuit path though the power converter (2) will extinguish the detected electric arc in the connected DC circuit (10).

## Description

### DESCRIPTION

### Technical Field

The present invention relates to methods of controlling an electrical system, and to electrical systems, and in particular to electrical systems that include a power converter for converting a direct current (DC) input voltage into an alternating current (AC) output voltage, for example to be exported to an AC power network or utility grid. The power converter may be controlled to extinguish an electric arc resulting from a short circuit fault in a DC circuit connected to the power converter, i.e., a short circuit fault on the DC side of the power converter.

In one arrangement, the electrical system may be a part of a solar power plant where the power converter is connected to one or more photovoltaic (PV) panels.

### Background Art

The solar inverter has a critical role in a solar power plant and is used to convert a DC input voltage provided by an array of PV panels to an AC output voltage that may be exported to an AC power network or utility grid.

The solar inverter includes a plurality of controllable semiconductor switches that may be turned on and off according to a suitable control strategy to produce the desired AC output voltage.

The PV panels are connected to the DC input terminals of the solar inverter by a DC circuit. The term "DC circuit" is intended to include all circuitry on the DC side of the solar inverter that is used to connect the PV panels to the DC input terminals of the solar inventor and may include, for example, one or more of the DC link, DC bus, DC input strings etc. mentioned below in the context of the background art. Although some particular arrangements for the DC circuit are described herein for the purpose of explaining a conventional solar power plant, it will be understood that many other DC circuits are possible.

The DC circuit may include a DC link with one or more capacitors. The DC link typically includes a positive DC conductor and a negative DC conductor. The DC link typically also includes a DC switch that may be opened to isolate the inverter from the PV panels. The DC link is typically the part of the DC circuit that is connected to the DC input terminals of the solar inverter, i.e., the downstream part of the DC circuit.

The DC circuit may also include a plurality of DC input strings and a DC bus. Each DC input string typically includes a positive DC conductor and a negative DC conductor. The DC bus typically includes a positive DC conductor and a negative DC conductor. The DC input strings are at the upstream part of the DC circuit and are connected in parallel to the DC bus, which is connected, in turn, to the DC link. In an alternative arrangement, a plurality of DC input strings may be connected in parallel to a combiner box, which is then connected to the DC bus by a positive DC conductor and a negative DC conductor. A plurality of such combiner boxes can be connected in parallel to the DC bus.

Each DC input string may be connected to one or more PV panels. Any suitable number of PV panels are typically connected together in series with the first PV panel being connected to the positive DC conductor of the DC input string and the last PV panel being connected to the negative DC conductor or *vice versa.*

A short circuit fault in the DC circuit (i.e., on the DC side of the solar inverter) may result in an electric arc across the air gap between two DC conductors of the DC circuit. During the daytime, DC current generated by the array of PV panels will be fed into the electric arc unless protective measures are taken. The protective measures to be taken may depend on the location of the electric arc within the DC circuit. For example, if the electric arc is located in one of the PV panels or in one of the DC input strings, it may be possible to isolate the faulty DC input string by activating a fuse in the faulty DC input string. Such fuses are typically included in each of the DC input strings, for example at the downstream end of each string where it is connected to the DC bus. In this case, the solar inverter may be shut down and may be subsequently re-started automatically if no significant damage has occurred. The electric arc will continue to burn in the faulty DC input string (fed by the connected PV panels) until the end of the day but the rest of the solar power plant may continue to operate and export power to the AC power network or utility grid. At night, when the electric arc is finally extinguished, the DC circuit may be repaired.

The activation of the fuse in the faulty DC input string may be dependent on the breaking capacity, current rating, characteristics of the respective fuse and environmental conditions such as ambient temperature, for example. In particular, if the PV panels connected to the non-faulty DC input strings are not generating enough operating current to feed into the faulty DC input string, for example because it is a cloudy day, the fuse in the faulty DC input string may not be properly activated. In this case, the solar inverter cannot be automatically re-started and would remain shut down until the end of the day.

If the electric arc is in the DC circuit between the DC switch and the solar inverter, opening the DC switch may be sufficient to extinguish the electric arc because it will isolate the electric arc from the PV panels. (It may also be necessary to open an AC switch in the AC circuit that connects the inverter to the AC power network or utility grid to isolate any contribution to the electric arc from the AC side of the inverter.) But if the electric arc is located on the other side of the DC switch, e.g., between the DC switch and the DC bus to which the DC input strings are connected, the electric arc cannot be extinguished by opening the DC switch and no protection is provided by the fuses in the DC input strings either. This is because the maximum short circuit current in the DC link is only moderately higher, e.g., about 20% to 80%, than the rated DC link current and the inverter rating. So the fuses in the DC input strings will typically not be activated.

The present invention aims to overcome these problems by extinguishing any electric arc in the DC circuit by suitable operation of the solar inverter or other power converter.

### Summary of the invention

The present invention provides a method of controlling an electrical system (e.g., an electrical system that forms part of a solar power plant) comprising:
a direct current (DC) power source; and
a power converter including at least one controllable semiconductor device, each semiconductor device including at least a controllable semiconductor switch, the power converter having DC input terminals connected to the DC power source by means of a DC circuit;
wherein the method comprises the step of:
   in response to a detected electric arc on the DC side of the power converter, enabling a short circuit state of the power converter by controlling the at least one semiconductor switch of the power converter (e.g., turning on some or all of the semiconductor switches) to create a short circuit between the DC input terminals.

Any reference herein to "DC circuit" is intended to include all circuitry on the DC side of the power converter that is used to connect the DC power source to the DC input terminals of the power converter and may include, for example, one or more of the DC link, DC bus, DC input strings etc. mentioned below in the context of the present invention. Although some particular arrangements for the DC circuit are described herein for the purpose of explaining the present invention, it will be understood that many other DC circuits are possible.

The method of the present invention is capable of extinguishing an electric arc without the need for conventional fuses to be provided in the DC circuit, for example in each DC input string. Utilising the method can therefore provide a significant cost saving because the fuses can be omitted. Deliberately creating a short circuit between the DC input terminals by providing one or more short circuit paths through the power converter may extinguish an electric arc formed across the air gap between two DC conductors of the DC circuit as a result of the short circuit fault. The short circuit path(s) through the power converter will be parallel to the electric arc in the DC circuit and will divert fault current from the DC power source away from the electric arc, thereby extinguishing it. Preferably all of the fault current is diverted from the electric arc such that the electric arc between the DC conductors of the DC circuit is fully extinguished. However, any method where at least some of the fault current is diverted away from the electric arc as a result of enabling the short circuit state will fall within the scope of the present invention.

Each semiconductor device of the power converter may further include an anti-parallel connected diode, i.e., a diode connected in anti-parallel with its associated controllable semiconductor switch. Any reference herein to "semiconductor device" may refer to the controllable semiconductor switch and/or the anti-parallel connected diode as appropriate. Controllable semiconductor switches that normally include an anti-parallel connected diode would include insulated-gate bipolar transistors (IGBTs), for example. Controllable semiconductor switches that do not normally have or do not need an anti-parallel connected diode would include reverse conducting IGBTs (RC-IGBTs), bi-mode insulated gate transistors (BIGTs) and metal-oxide-semiconductor field-effect transistors that utilise silicon carbon (SiC MOSFETs), for example.

Unless otherwise stated, any reference herein to components being "connected" includes both a direct and an indirect electrical connection or coupling, e.g., with the option for components to be electrically connected or coupled together by means of one or more interposing components.

In one arrangement, the DC circuit may include a DC link with a positive DC conductor and a negative DC conductor connected to the DC input terminals of the power converter. The DC link may include one or more capacitors connected between the DC conductors. The electrical system may include a DC switch connected between the DC power source and the DC input terminals of the power converter, e.g., as part of the DC circuit such as the DC link. The DC power source may be connected to the DC link, optionally by means of a DC bus with a positive DC conductor and a negative DC conductor that are connected, in turn, to the positive and negative DC conductors of the DC link. The DC bus may allow a plurality of DC power sources to be connected to the DC link in parallel. The plurality of DC power sources may be connected in parallel to the DC bus by means of DC input strings. Each DC input string may be connected to one or more DC power sources such as one or more photovoltaic (PV) panels forming part of a solar power plant, for example. Any suitable number of PV panels may be connected together in series with the first PV panel being connected to the positive DC conductor of the DC input string and the last PV panel being connected to the negative DC conductor of the DC input string, or *vice versa.* Instead of each DC input string being connected directly to the DC bus, a plurality of DC input strings may be connected in parallel to a combiner box, which is then connected to the DC bus by positive and negative DC conductors, for example. A plurality of such combiner boxes may be connected to the DC bus in parallel. It will be readily understood that other DC circuits may be used to connect the DC power source, including one or more PV panels, to the DC input terminals of the power converter.

In one arrangement, the power converter includes a DC/AC converter with at least one alternating current (AC) output terminal. The DC/AC converter includes DC input terminals that are either connected directly to the DC circuit or to the DC output terminals of an interposing DC/DC converter to define a two-stage power converter. Such a DC/DC converter (e.g., a step-up or boost converter) includes DC input terminals that are connected to the DC circuit and DC output terminals that are connected to the DC input terminals of the DC/AC converter. In the case of a two-stage power converter, the short circuit between the DC input terminals of the power converter may be created by providing at least one short circuit path through the DC/DC converter and/or by providing at least one short circuit path through the DC/AC converter as required. Any reference herein to the "power converter" may refer to the DC/DC converter or the DC/AC converter as appropriate.

The electrical system may also include an AC circuit connected to the AC output terminal(s) of the DC/AC converter. The AC circuit is connectable to an AC power network or utility grid. The AC circuit may include an AC switch and a transformer, as well as AC line filters etc. The AC output terminal(s) of the DC/AC converter may be connected to the AC switch and the AC switch may be connected, in turn, to a primary winding of the transformer, with a secondary winding of the transformer being connectable to the AC power network or utility grid. The AC circuit may have any suitable number of phases, but three phases would be typical with the DC/AC converter having three phase legs, three AC output terminals etc.

If the power converter is initially in a converter on state and operating normally, the power converter may be transitioned to a converter off state in response to a fault which includes an electric arc detected as a consequence of a short circuit. This would normally be a general protective measure for the electrical system and may be carried out regardless of the location of the electric arc caused by the short circuit fault. The power converter may then subsequently be transitioned from the converter off state to the short circuit state. Alternatively, the power converter may be transitioned directly from the converter on state (i.e., its initial operating state) to the short circuit state on detection of the electric arc, normally after the AC switch has been opened - see below.

Any reference herein to the "on state" of the power converter may refer to a state in which the power converter is enabled and is operating normally in switch mode operation. For example, in the converter on state, the semiconductor switches of the DC/AC converter are normally being controlled to turn on and off (i.e., transitioned at high frequency between a conduction mode and a blocking mode) to convert the DC input voltage provided by the DC power source (or the interposing DC/DC converter in the case of a two-stage power converter) to an AC output voltage that may be exported to an AC power network or utility grid, and the one or more semiconductor switches of the optional DC/DC converter are normally being controlled to turn on and off to convert the DC input voltage provided by the DC power source to a desired DC input voltage for the DC/AC converter. In the case where each semiconductor device includes an anti-parallel connected diode, during normal switch mode operation, the diode will be in a blocking mode when its semiconductor switch is in a conduction mode and *vice versa.* When the short circuit state is enabled, after electric arc detection, one or more of the semiconductor switches of the power converter are controlled to turn on (i.e., transitioned to the conduction mode) to provide one or more short circuit paths through the power converter.

Any reference herein to the "off state" of the power converter may refer to a state in which the power converter has been disabled or a state where the power converter remains enabled but where all of the semiconductor switches are turned off or are in a blocking mode. It will be understood that, when turning off semiconductor switches following a fault event, inflowing fault currents can sometimes force natural commutation which can mean that not all of the semiconductor devices are transitioned to the blocking mode due to the fault. But this will still be considered to be a converter off state.

When the power converter is in the converter on state, the DC and AC switches will normally be closed.

The DC and AC switches may be opened in response to the electric arc detection. This would be a general protective measure for the electrical system and may be carried out regardless of the location of the electric arc. In practice, the AC switch should normally be opened before the power converter is transitioned to the short circuit state if any contribution to the short circuit current from the AC power network or utility grid is likely to damage the semiconductor devices of the power converter. But if a determination is made that such a contribution to the short circuit current from the AC power network or power grid is not likely to cause damage or be problematic, e.g., because it is below an acceptable limit or threshold, the AC switch may remain closed. In the case of some two-stage power converters, one or more short circuit paths may be provided through the DC/DC converter while the AC switch is closed and the DC/AC converter is still connected to the AC power network or utility grid. This may be possible if the DC/DC converter decouples the DC/AC converter from the faulty DC circuit. The short circuit path(s) through the DC/DC converter would not short circuit the DC link between the DC/DC converter and the DC/AC converter, and inflowing fault current from the AC power network or utility grid can be avoided. One or more short circuit paths may then be subsequently provided through the DC/AC converter after it has been detected that the AC switch is open. This allows the DC/DC converter to start to extinguish the electric arc before the AC switch is open. (In some cases, it can take up to about 100 ms for the AC switch to open after receiving an open command from the controller). The method may further comprise a step of detecting if the AC switch is open and transitioning the DC/AC converter to the short circuit state only after such a detection has been made.

The method may further include the step of determining if the DC link voltage exceeds a voltage threshold. In one arrangement, where the DC switch remains closed after the electric arc has been detected, if the voltage threshold is exceeded, the method may further include the steps of opening the DC switch, discharging the DC link until the DC link voltage does not exceed the voltage threshold, transitioning the power converter from the converter off state to the short circuit state, and closing the DC switch. If the voltage threshold is not exceeded, the method may further include the step of transitioning the power converter from the converter off state to the short circuit state. In other words, the power converter is only transitioned from the converter off state to the short circuit state if the DC link voltage does not exceeds a voltage threshold, for example in the range between about 10 to about 100 VDC. If the DC link voltage exceeds the voltage threshold it would indicate that the capacitors in the DC link are also charged up to the DC link voltage. If the power converter is transitioned to the short circuit state, the capacitors in the DC link would also be short circuited and this would result in an unacceptably high short circuit current that could cause serious damage to the semiconductor devices if the DC link voltage is too high. Opening the DC switch if the DC link voltage exceeds the voltage threshold allows the DC link to be discharged. In particular, it allows the capacitors in the DC link to be discharged, either passively through a discharge resistor by waiting for a period of time, or actively by carrying out a suitable operation of the power converter or some other action. Once the capacitors are discharged, the power converter may be safely transitioned to the short circuit state and the DC switch may be closed.

In one arrangement, where the DC switch is opened in response to the electric arc detection, if the DC link voltage exceeds a voltage threshold (as defined above), the method may further include the steps of discharging the DC link until the DC link voltage does not exceed the voltage threshold, transitioning the power converter from the converter off state to the short circuit state, and closing the DC switch. If the DC link voltage does not exceed the voltage threshold, the method may further include the steps of transitioning the power converter from the converter off state to the short circuit state, and closing the DC switch. If the method is started with the DC switch open, it will normally be expected that the capacitors in the DC link would not be charged so that the short circuit state of the power converter will be enabled. But if this is not the case, the DC link is discharged as described above until the DC link voltage does not exceed the voltage threshold. Once the capacitors are discharged, the power converter may be safely transitioned to the short circuit state and the DC switch may be closed.

The method may further comprise the step of maintaining the short circuit state of the power converter for a certain period of time, or at least until the electric arc has been extinguished.

Once the electric arc has been extinguished, the short circuit state may be disabled. Any suitable method may be used to determine if the electric arc has been extinguished and this is described in more detail below.

Once the short circuit state has been disabled, e.g., the power converter is transitioned to the converter off state or to another state, a determination may be made if the short circuit fault has been cleared. For example, the recovery of the DC link voltage after the short circuit state has been disabled may indicate that the fault has been cleared. If the short circuit fault has been cleared, the power converter may be restarted for normal operation. Alternatively, if the short circuit fault has not been cleared, the DC switch may be opened to allow for repair or maintenance of the electrical system.

The optional DC/DC converter may utilise one or more semiconductor switches, e.g., IGBTs, MOSFETs etc., controlled to turn on an off by a controller and have any suitable topology, operating mode etc. The semiconductor device(s) will be selected to have voltage and current ratings that allows the DC/DC converter to safely carry the short circuit current of the DC power source when the power converter is operated in the short circuit state. In one arrangement, the DC/DC converter may include a semiconductor switch connected between positive and negative DC rails of the DC/DC converter. The DC/DC converter may also include other components such as a flyback diode, inductance etc. In another arrangement, the DC/DC converter may include a plurality of branches with each branch being connected in parallel between the positive and negative DC rails. Each branch may include a plurality of semiconductor switches and optional diodes arranged according to the particular topology. The positive and negative DC rails of the DC/DC converter may be connected to or define the DC input and output terminals of the DC/DC converter.

To put the DC/DC converter into a short circuit state, at least one semiconductor switch is controlled to turn on (i.e., is transitioned to the conduction mode) so that a short circuit current generated by the DC power source may flow directly between the positive and negative DC rails. In one arrangement, where the DC/DC converter has a plurality of branches, the appropriate semiconductor switch of at least one branch is controlled to turn on so that a short circuit current generated by the DC power source may flow directly between the positive and negative DC rails. The appropriate semiconductor switch in each branch may be turned on simultaneously so that a plurality of short circuit paths are provided through the DC/DC converter at the same time, or in an appropriate sequence so that short circuit paths are provided on a branch-by-branch basis, for example. An appropriate sequence may include a suitable switching pattern for the semiconductor switches in one or more of the branches. Such a switching pattern may be operated at any suitable switching frequency, e.g., up to about 5 kHz.

A single short circuit current path may be provided through one of the branches of the DC/DC converter, or two or more parallel short circuit current paths may be provided through two or more of the branches at the same time. If the DC/DC converter has three branches, for example, a short circuit path may be provided through a first branch, then through a second branch, then through a third branch, then through the first branch, and so on, or parallel short circuit paths may be provided through the first and second branches, then through the second and third branches, then through the first and third branches, then through the first and second branches, and so on, for example. The semiconductor switches may be controlled in any suitable way, optionally with reference to the short circuit current in the DC link, and may be turned on to provide a short circuit path for any suitable period of time. In the case of a two-stage power converter, the short circuit path(s) provided through the DC/DC converter may be in parallel with a short circuit path provided through the DC/AC converter. In the absence of any parallel short circuit path through the DC/AC converter, it will be understood that there should be no intermission between the short circuit paths through the DC/DC converter because this would lead to the capacitors in the DC link being charged. So if the semiconductor switches of the DC/DC converter are turned on in a branch-by-branch basis, for example, it is important that there is some overlap between the short circuit paths (e.g., for at least about 20 µs).

The DC/AC converter may utilise a plurality of semiconductor switches, e.g., IGBTs, controlled to turn on and off by a controller, arranged in any suitable topology, e.g., two-level voltage source converter (VSC) topology or a three-level neutral point piloted (NPP) VSC topology. The semiconductor devices will be selected to have voltage and current ratings with reference to the particular inverter topology that allows the DC/AC converter to safely carry the short circuit current of the DC power source when the power converter is operated in the short circuit state.

The DC/AC converter may include a plurality of phase legs with each phase leg being connected in parallel between positive and negative DC rails of the DC/AC converter and to a respective AC output terminal such that the DC/AC converter provides a multiphase AC output voltage. The positive and negative DC rails of the DC/AC converter may be connected to or define the DC input terminals of the DC/AC converter. The DC input terminals of the DC/AC converter may be connected directly to the DC circuit or, in the case of a two-stage power converter, to the DC output terminals of the DC/DC converter. The DC/DC converter and the DC/AC converter may have common or shared positive and negative DC rails.

Each phase leg will include a plurality of semiconductor switches and optional diodes arranged according to the particular topology. At least some of the semiconductor switches in each phase leg will be connected in series between the DC terminals of the power converter, i.e., between the positive and negative DC rails, or between one of the positive and negative DC rails and any intermediate DC rail or point - a single short circuit path between the positive and negative DC rails may be provided by certain semiconductor switches of two or more of the phase legs via the intermediate DC rail or point. To put the DC/AC converter into the short circuit state, the appropriate semiconductor switches of at least one phase leg are controlled to turn on so that a short circuit current generated by the DC power source may flow directly between the positive and negative DC rails. The semiconductor switches in the phase legs may all be turned on simultaneously or in an appropriate sequence within a particular phase leg or on a phase leg-by-phase leg basis, for example. An appropriate sequence may include a suitable switching pattern for the semiconductor switches in one or more of the phase legs. Such a switching pattern may be operated at any suitable switching frequency, e.g., up to about 5 kHz.

A single short circuit current path may be provided through one or more of the phase legs of the DC/AC converter, or two or more parallel short circuit current paths may be provided through two or more of the phase legs at the same time. If the DC/AC converter has three phase legs, for example, a short circuit path may be provided through a first phase leg, then through a second phase leg, then through a third phase leg, then through the first phase leg, and so on, or parallel short circuit paths may be provided through the first and second phase legs, then through the second and third phase legs, then through the first and third phase legs, then through the first and second phase legs, and so on, for example. The semiconductor switches may be controlled in any suitable way, optionally with reference to the short circuit current in the DC link, and may be turned on to provide a short circuit path for any suitable period of time. In the case of a two-stage power converter, the short circuit path(s) provided through the DC/AC converter may be in parallel with a short circuit path provided through the DC/DC converter. In the absence of any parallel short circuit path through the DC/DC converter, it will be understood that there should be no intermission between the short circuit paths through the DC/AC converter because this would lead to the capacitors in the DC link being charged. So if the series-connected semiconductor switches in the phase legs of the DC/AC converter are turned on in a phase leg-by-phase leg basis, for example, it is important that there is some overlap between the short circuit paths (e.g., for at least about 20 µs).

In the case of a two-stage power converter, the power converter may be transitioned to the short circuit state by providing at least one short circuit path through the DC/DC converter and/or by providing at least one short circuit path through the DC/AC converter. In other words, it may be possible to provide a short circuit path through just one of the converters, or through both of the converters simultaneously. Short circuit paths may be provided sequentially through the DC/DC converter and the DC/AC converter, i.e. first through one of the converters then through the other converter or through both of the converters. In one arrangement, one or more short circuit paths may be provided first through the DC/DC converter while the DC/AC converter is in a converter off state and before the AC switch is open. After it has been detected that the AC switch is open, the DC/AC converter may be transitioned to the short circuit state to provide one or more short circuit paths through the DC/AC converter. As mentioned above, one benefit of such an arrangement is that the DC/DC converter may start to divert short circuit current away from the electric arc before the AC switch has opened and while the DC/AC converter remains connected to the AC power network or utility grid.

The presence of an electric arc in the electrical system may initially be detected by any suitable method. For example, electric arc detection may be based on one or more of:
- current measurements made using suitable current sensors located on the power converter-side of the DC switch (e.g., measuring the current in the DC link or between the DC link and ground), and the DC power source-side of the DC switch (e.g., in each of the DC input strings, or in combiner boxes that may be used to connect the DC output from two or more DC power sources together to provide a single DC input string),
- voltage measurements made using suitable voltage sensors located on the power converter-side of the DC switch (e.g., measuring the voltage in the DC link), which allow superimposed arc voltages to be detected, for example using spectral analysis,

- voltage measurements between the DC link and ground (not shown), which allow superimposed arc voltages to be detected, for example using spectral analysis,
- power imbalances within the electrical system, e.g., between the DC power source and the power converter, and
- measurement of electric power conditions or environmental conditions, e.g., temperature, light etc., particularly within a housing or cubicle, that might indicate the existence of an electric arc.

The method of the present invention may be carried out regardless of the location of the electric arc within the DC circuit. But in some arrangements, the method of the present invention may be carried out only if the electric arc is located within a particular part of the DC circuit, for example where diverting fault current into one or more short circuit paths through the power converter may be particularly effective at extinguishing the electric arc and/or where conventional protective methods are not always reliable. The method may further comprise the step of discriminating the detected electric arc to determine the location of the electric arc within the DC circuit. This discrimination step may be carried out as part of the electric arc detection, immediately after the electric arc has been detected in the DC circuit, or it may be carried out after the power converter has been transitioned to the converter off state and after the DC and AC switches have been opened as a general protective measure for the electrical system, for example. In the event of an electric arc being detected in the AC circuit or in the power converter itself, for example, conventional protective measures may be taken that will be known to the skilled person and are not described further. Similarly, if the location of the electric arc within the DC circuit is such that it may be dealt with using conventional protective measures, the method of the present invention does not need to be carried out. For example, the power converter may be transitioned to a converter off state and then remain in the converter off state until conventional protective measures have extinguished the electric arc and the short circuit fault has been cleared, at which time the power converter may be restarted or a repair to the DC circuit may be undertaken.

The method of the present invention may be carried out in combination with conventional protective measures for electric arc/short circuit faults in the electrical system. The method of the present invention may be carried out simultaneously with such conventional protective measures, or in an appropriate sequence or coordination with such conventional protection measures.

The location of the electric arc in the DC circuit may be discriminated using any suitable method. For example, locating the position of the electric arc may be based on one or more of:
- current measurements made using suitable current sensors located on the power converter-side of the DC switch (e.g., measuring the current in the DC link or between the DC link and ground), and the DC power source-side of the DC switch (e.g., in each of the DC input strings, or in combiner boxes that may be used to connect the DC output from two or more DC power sources together to provide a single DC input string),
- voltage measurements made using suitable voltage sensors located on the power converter-side of the DC switch (e.g., measuring the voltage in the DC link), which allow superimposed arc voltages to be detected, for example using spectral analysis,
- voltage measurements between the DC link and ground (not shown), which allow superimposed arc voltages to be detected, for example using spectral analysis,
- power imbalances within the electrical system, e.g., between the DC power source and the power converter, and
- measurement of electric power conditions or environmental conditions, e.g., temperature, light etc., particularly within a housing or cubicle, that might indicate the existence of an electric arc.

For example, if currents are measured on both sides of the DC switch (i.e., on the power converter-side and the DC power source-side) and there is a deviation in the current measurements this might indicate that the electric arc is on the DC power source-side of the DC switch. The current measurement on the DC power source-side may be made in the DC input strings or the combiner boxes, for example. If there is no deviation in the current measurements, but the voltage in the DC link and/or the current between the DC link and the ground are measured and spectral analysis includes high frequency components (i.e., indicating an electric arc) this might indicate that the electric arc is on the power converter-side of the DC switch. Measurements of environmental conditions, e.g., temperature, light etc., particularly within a housing or cubicle, may be taken on both sides of the DC switch which might indicate the location of an electric arc. For example, sensors might detect a sudden increase in light intensity or temperature caused by an arc flash at a particular location within the DC circuit.

The present invention may be particularly beneficial if the electric arc is caused by a short circuit fault on the DC power source-side of the DC switch. This is because the DC power source may continue to feed current into the short circuit fault even after the DC switch is opened. For example, if the DC power source includes one or more PV panels, current will continue to be generated by the PV panels during the daytime and this may be fed into the electric arc. The electric arc may be extinguished by deliberately creating one or more short circuit paths through the power converter in parallel with the electric arc.

The methods used for electric arc detection may also be used to determine when the electric arc has been extinguished. For example, if there is no longer a deviation in the current measurements on both sides of the DC switch this might indicate that the electric arc on the DC power source-side of the DC switch has been extinguished. If the voltage in the DC link and/or the current between the DC link and the ground are measured and spectral analysis no longer includes high frequency components this might indicate that the electric arc on the power converter-side of the DC switch has been extinguished. Measurements of environmental conditions, e.g., temperature, light etc., particularly within a housing or cubicle, may indicate when the electric arc has been extinguished. For example, sensors might also detect a sudden decrease in light intensity or temperature when the electric arc is extinguished.

The present invention provides an electrical system (e.g., an electrical system that may form part of a solar power plant) comprising:
a DC power source;
a power converter including at least one controllable semiconductor device, each semiconductor device including at least a controllable semiconductor switch, the power converter having DC input terminals connected to the DC power source by means of a DC circuit; and
a controller;
wherein the controller is configured to:
   in response to a detected electric arc on the DC side of the power converter, enable a short circuit state of the power converter by controlling the at least one semiconductor switch of the power converter (e.g., turning on some or all of the semiconductor switches) to create a short circuit between the DC input terminals.

The controller may be integrated with the power converter or a stand-alone controller, for example.

The controller may be further configured to carry out the steps described herein.

### Drawings

Figure 1 is a schematic diagram showing a solar power plant according to the present invention;
Figure 2 is a schematic diagram showing part of an alternative DC circuit for the solar power plant of Figure 1;
Figure 3 shows a first example of a DC/AC converter with a two-level VSC topology with three phase legs that may be implemented as a single-stage power converter in the solar power plant of Figure 1;
Figure 4 shows a second example of a DC/AC converter with a three-level NPP VSC topology with three phase legs that may be implemented as a single-stage power converter in the solar power plant of Figure 1;
Figure 5 shows a first example of a two-stage power converter including a DC/DC converter and a DC/AC converter with a two-level VSC topology with three phase legs that may be implemented in the solar power plant of Figure 1;
Figure 6 shows a second example of a two-stage power converter including an alternative DC/DC converter and a DC/AC converter with a two-level VSC topology with three phase legs that may be implemented in the solar power plant of Figure 1;
Figure 7 is a flowchart of a method of extinguishing an electric arc caused by a short circuit fault in the solar power plant of Figure 1;
Figure 8 shows an arrangement for the first example of the DC/AC converter of Figure 3 where three parallel short circuit current paths are provided simultaneously through all three phase legs during the short circuit state;
Figure 9 shows an arrangement for the second example of the DC/AC converter of

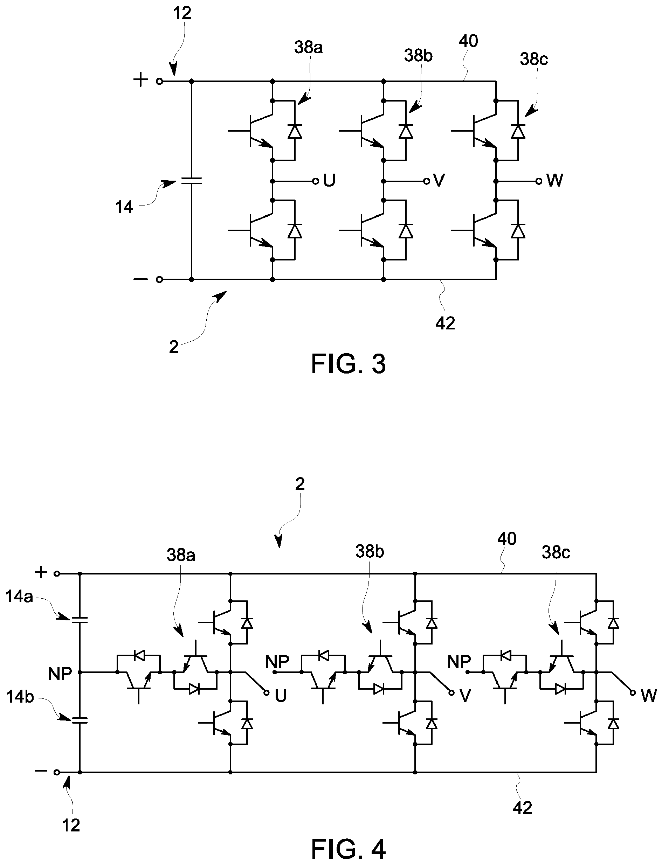

Figure 4 where two parallel short circuit paths are provided simultaneously through all three phase legs during the short circuit state;

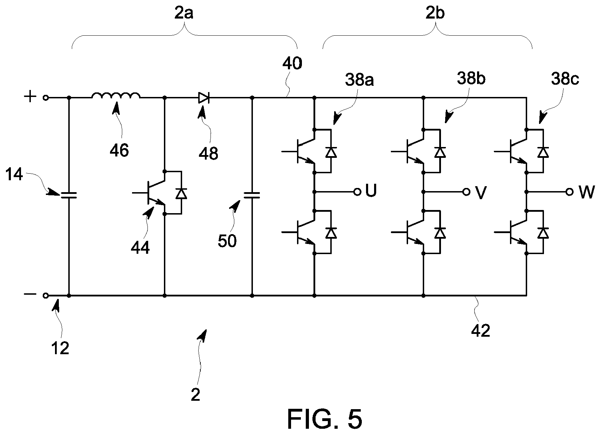

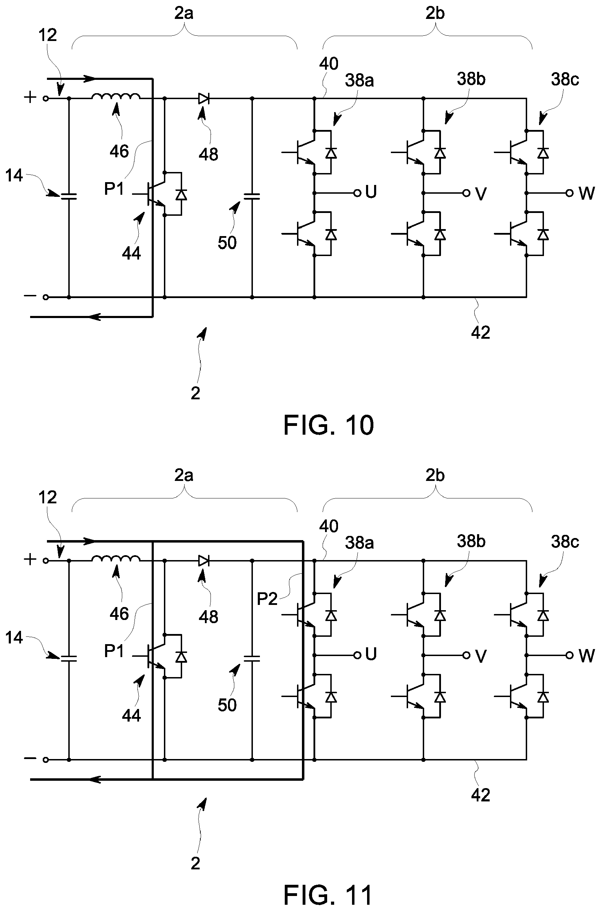

Figure 10 shows an arrangement for the first example of the two-stage power converter of Figure 5 where a short circuit current path is provided through the DC/DC converter during the short circuit state;
Figure 11 shows an arrangement for the first example of the two-stage power converter of Figure 5 where a short circuit current path is provided through the DC/DC converter and a parallel short circuit path is provided through one phase leg of the DC/AC converter during the short circuit state;

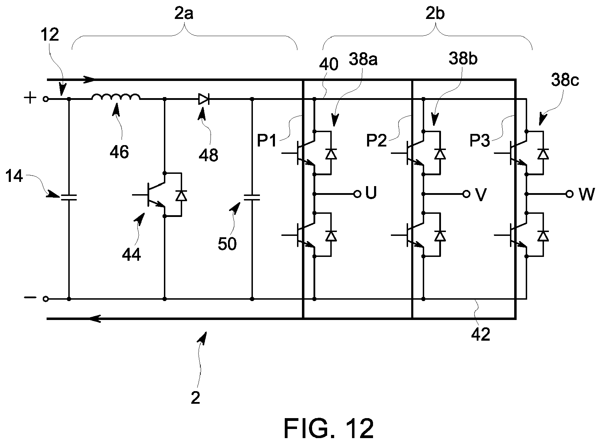

Figure 12 shows an arrangement for the first example of the two-stage power converter of Figure 5 where three parallel short circuit current paths are provided simultaneously through all three phase legs of the DC/AC converter during the short circuit state;

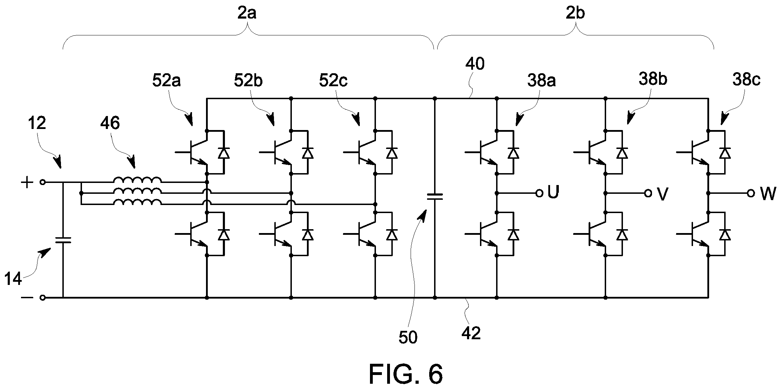

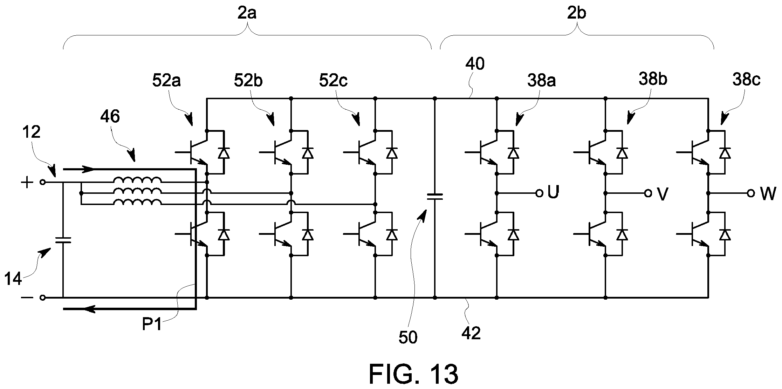

Figure 13 shows an arrangement for the second example of the two-stage power converter of Figure 6 where a short circuit path is provided through the DC/DC converter during the short circuit state; and

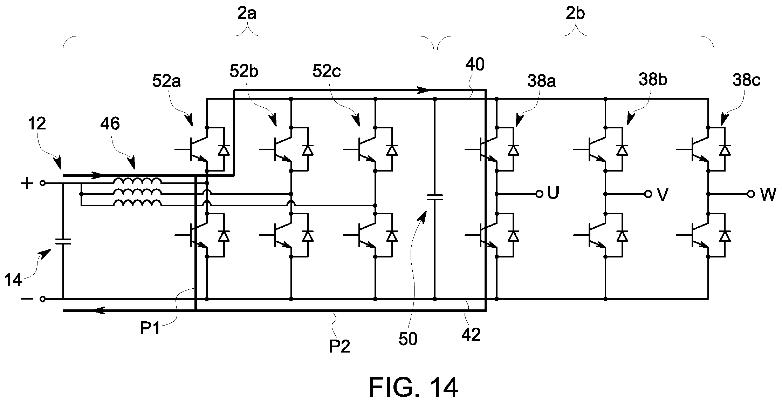

Figure 14 shows an arrangement for the second example of the two-stage power converter of Figure 6 where a short circuit current path is provided through the DC/DC converter and a parallel short circuit path is provided through one phase leg of the DC/AC converter during the short circuit state.

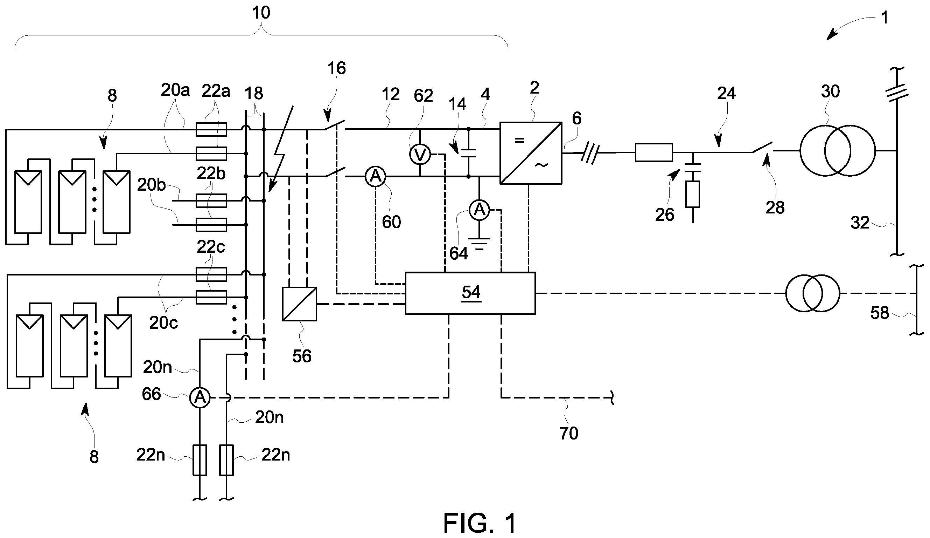

Figure 1 shows a solar power plant 1 according to the present invention.

The solar power plant 1 includes a power converter 2 with two DC input terminals 4 and three AC output terminals 6.

The DC input terminals 4 are connected to a plurality of photovoltaic (PV) panels 8 by means of a DC circuit 10. The DC circuit 10 includes a DC link 12 having positive and negative DC conductors that are connected to the DC input terminals 4, and one or more capacitors 14 connected between the positive and negative DC conductors. The DC link 10 also includes a DC switch 16.

The DC circuit 10 includes a DC bus 18 with positive and negative DC conductors connected to the DC link 12. A plurality of DC input strings 20a, 20b, ..., 20n are connected in parallel to the DC bus 18. Each DC input string 20a, 20b, ..., 20n includes positive and negative DC conductors and is connected to one or more PV panels 8. In particular, any suitable number of PV panels 8 may be connected together in series with the first PV panel being connected to the positive DC conductor of the DC input string 20a, 20b, ..., 20n and the last PV panel being connected to the negative DC conductor or *vice versa.* The number of PV panels 8 connected to each DC input string 20a, 20b, ..., 20n will depend on the design of the solar power plant.

Each DC input string 20a, 20b, ..., 20n is provided with at least one fuse 22a, 22b, ..., 22n for over-current protection. The fuses 22a, 22b, ..., 22n are shown for completeness and it will be readily appreciated that they may be omitted completely in those arrangements where the power converter 2 is used as the only way of extinguishing an electric arc caused by a short circuit fault in the DC circuit 10. In other arrangements, the fuses 22a, 22b, ...., 22n may be retained and the operation of the power converter 2 may be coordinated with conventional protective measures. The AC terminals 6 of the power converter 2 are connected to an AC circuit 24. The AC circuit 24 is a three-phase AC circuit and includes AC filters 26, an AC switch 28 and a transformer 30. The transformer 30 includes a primary winding that is connected to the AC terminals 6 of the solar inverter 2 and a secondary winding that is connected to an AC power network or utility grid 32.

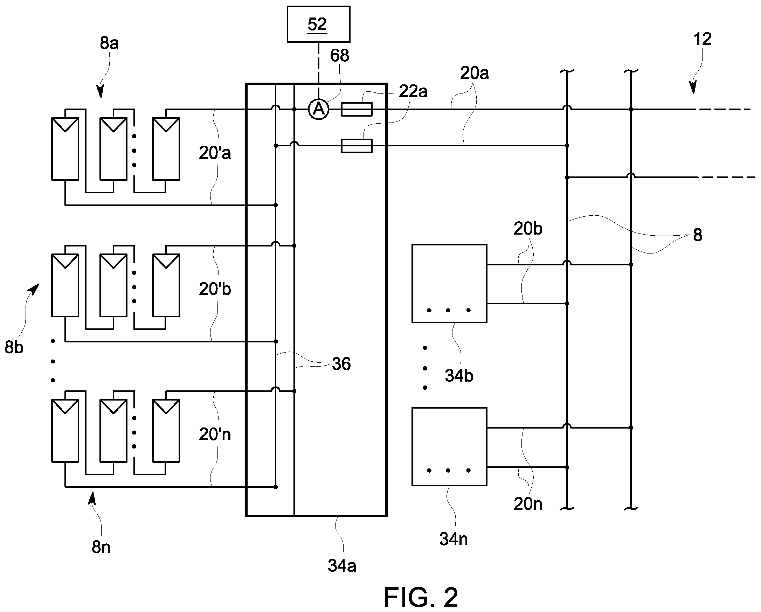

Figure 2 shows part of an alternative DC circuit which is similar to the DC circuit shown in Figure 1 and like components have been given the same reference numbers. The alternative DC circuit uses combiner boxes. A plurality of primary DC input strings 20'a, 20'b, ..., 20'n are connected in parallel to a combiner box 34a. Each primary DC input string 20'a, 20'b, ..., 20'n includes positive and negative DC conductors and is connected to a plurality of series-connected PV panels 8a, 8b, ..., 8n. The number of PV panels 8a, 8b, ..., 8n connected to each DC input string 20'a, 20'b, ..., 20'n will depend on the design of the solar power plant.

The primary DC input strings 20'a, 20'b, ..., 20'n are connected in parallel to a DC bus 36 within the combiner box 34a. Additional combiner boxes 34b, ..., 34n are also shown schematically and are connected to series-connected PV panels in the same way.

A secondary DC input string 20a, 20b, ..., 20n is connected to each combiner box 34a, 34b, ..., 34n. In particular, each secondary DC input string 20a, 20b, ..., 20n is connected in parallel between the respective DC bus 36 of the combiner box 34a, 34b, ..., 34n and the DC bus 8 of the DC circuit. Each secondary DC input string 20a, 22b, ...., 22n includes a fuse (only the fuse 22a in secondary DC input string 20a is shown for clarity) which can be omitted completely in some arrangements. In Figure 2 the fuses are shown to be located inside the combiner boxes 34a, 34b, ..., 34n because this is typical, but the fuses may also be located outside the combiner boxes in some arrangements.

The power converter 2 may be a DC/AC converter (e.g., a solar inverter) that includes a plurality of controllable semiconductor switches, e.g., IGBTs, and anti-parallel connected diodes, which have suitable voltage and current ratings and which are arranged in a suitable topology. Figure 3 shows a two-level VSC topology with three phase legs 38a, 38b and 38c. Figure 4 shows a three-level NPP VSC topology with three phase legs 38a, 38b and 38c. It will be readily understood that other topologies may be used in a practical implementation of the power converter 2. Each phase leg 38a, 38b and 38c includes a pair of semiconductor switches connected in series between a positive DC rail 40 and a negative DC rail 42 of the power converter 2. The positive and negative DC rails 40, 42 are connected to or define the DC input terminals 4 of the power converter 2 and are connected to the DC link 12. Each phase leg 38a, 38b, 38c also defines a respective AC output terminal 6 of the power converter 2 and is connected to a corresponding phase (i.e., U, V and W) of the three-phase AC circuit 24. In the case of the three-level NPP VSC topology shown in Figure 4, the pair of semiconductor switches that are connected in series between the positive and negative DC rails 40, 42 define a first (or "vertical") branch. Each phase leg 38a, 38b and 38c also includes semiconductor switches in a second (or "horizontal") branch that is connected between the point of connection of the semiconductor switches in the first branch and an intermediate DC point (labelled NP) of the DC link 12. A first capacitor 14a is connected between the intermediate DC point and the positive DC rail 40 and a second capacitor 14b is connected between the intermediate point and the negative DC rail 42.

With reference to Figures 5 and 6, the power converter 2 may be a two-stage power converter that includes a DC/DC converter 2a (e.g., a step-up or boost converter) and a DC/AC converter 2b (e.g., a solar inverter) connected together in series by a DC link. The DC/DC converter 2a has DC input terminals that define the DC input terminals 4 of the power converter 2 and are connected to the DC link 12. The DC/DC converter 2a steps-up (or "boosts") the DC input voltage from the PV panels 8 and supplies the stepped-up DC voltage to the DC/AC converter 2b, which converts it into an AC voltage that may be exported to the AC power network or utility grid 32.

Figure 5 shows a DC/DC converter 2a with a single controllable semiconductor switch 44, e.g., an IGBT or MOSFET, an inductance 46, a flyback diode 48. A capacitor 50 is part of the DC link that connects together the DC/DC and DC/AC converters 2a and 2b. The semiconductor switch 44 is connected between positive and negative rails 40, 42 that are shared by the DC/DC converter 2a and the DC/AC converter 2b. In this case, the shared positive rail 40 can be considered to include the inductance 46 and the flyback diode 48. Figure 6 shows an alternative DC/DC converter 2a with three branches 52a, 52b and 52c. Each branch 52a, 52b and 52c includes a pair of semiconductor switches connected in series between the positive and negative DC rails 40, 42. The midpoint of each branch 52a, 52b and 52c is connected to the positive DC input terminal of the power converter 2 by means of an inductance 46. It can be seen that the DC/DC converter shown in Figure 5 is a simplified version of the DC/DC converter shown in Figure 6 - it has a single branch where the upper semiconductor switch and its anti-parallel connected diode are replaced by the flyback diode 48.

The DC/AC converter 2b shown in Figures 5 and 6 is the same as the DC/AC converter shown in Figure 3 and has a two-level VSC topology with three phase legs 38a, 38b and 38c.

It will be readily understood that other topologies may be used in a practical implementation of the power converter 2.

The semiconductor switches of the power converter 2 are controlled to switch on and off by a controller 54. In the case of the DC/AC converters shown in Figures 3 to 6, the controller 54 may control the semiconductor switches in the three phase legs 38a, 38b and 38c to turn on and off. In the case of the DC/DC converter 2a shown in Figure 5, the controller 54 may control the semiconductor switch 44 to turn on and off. In the case of the DC/DC converter 2a shown in Figure 6, the controller 54 may control the semiconductor switches in the three branches 52a, 52b and 52c to turn on and off. As described above, turning a semiconductor switch on means transitioning it to the conduction mode and turning a semiconductor switch off means transitioning it to the blocking mode. For a two-stage power converter, the controller 54 may be split into separate controllers for the DC/DC converter and the DC/AC converter, for example.

The controller 54 receives power from the DC link 12 through a power converter 56 or additionally or alternatively from an external power source 58.

The controller 54 receives current and voltage measurements from suitable sensors or transducers within the solar power plant 1. In particular, the controller 54 receives:
- measurements of the DC link current and voltage from sensors 60, 62 shown in Figure 1,
- measurements of the current between the DC link and ground from sensor 64 shown in Figure 1,
- measurements of the current in the DC input strings from sensors 66 (note that in Figure 1 only one sensor is shown for simplicity, but it will be understood that a corresponding sensor may be provided in each DC input string 20a, 20b, ..., 20n), and
- measurements of the current in each combiner box from sensors 68 (note that in Figure 2 only one sensor is shown for simplicity, but it will be understood that a corresponding sensor may be provided in each combiner box 34a, 34b, ..., 34n).

The current and voltage measurements may be used by the controller 54 to detect a electric arc caused by a short circuit fault, to determine the location of the electric arc (e.g., within the DC circuit 10), and to determine when an electric arc caused by the short circuit fault has been extinguished by operating the power converter 2 according to the present invention. Other measurements or information 70 that may be received by the controller 54 may relate to electric power conditions or environmental conditions, e.g., temperature, light etc. that might indicate the existence of an electric arc. Such measurements or information might be provided by suitable sensors located, for example, within a housing or cubicle of the combiner boxes 34a, 34b, ..., 34n shown in Figure 2, or other parts of the DC circuit. The same measurements or information might also indicate the absence of an electric arc, and hence when an electric arc caused by the short circuit fault has been extinguished by the method of the present invention.

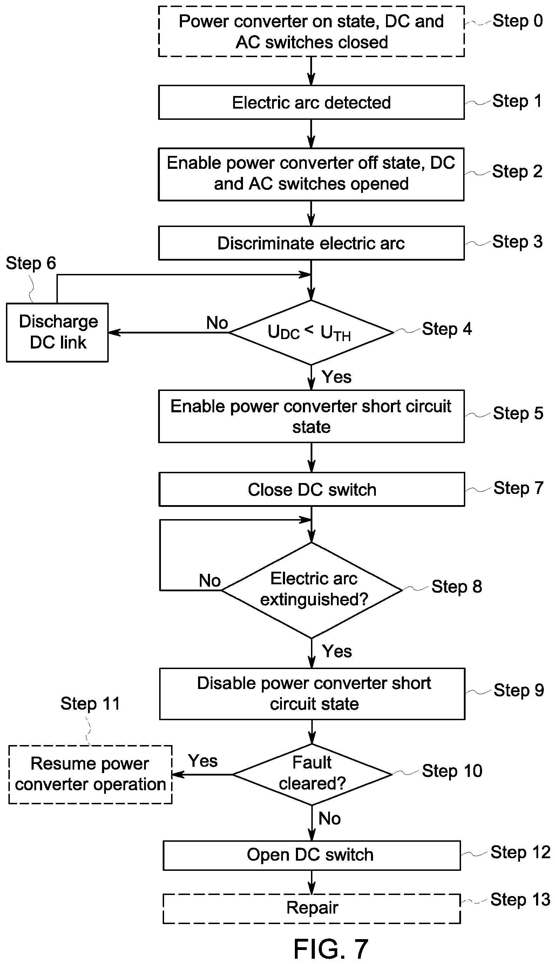

Figure 7 is a flowchart of a method of extinguishing an electric arc according to the present invention.

The power converter 2 is initially in a converter on state (step 0), i.e., the power converter 2 is operating normally. The DC switch 16 and the AC switch 28 are closed.

An electric arc is detected in the solar power plant 1 (step 1). The electric arc may be detected, for example, using the current and voltage measurements provided to the controller 54 from the various sensors, from power imbalances within the electrical system, e.g., between the PV panels 8 and the power converter 2, or using measurements 70 of electric power conditions or environmental conditions, e.g., temperature, light etc., particularly within a housing or cubicle, that might indicate the existence of an electric arc.

At step 2, in response to the detection of the electric arc, the power converter 2 is transitioned to a converter off state (step 2) where the power converter remains enabled, but all of the semiconductor switches are turned off or are in a blocking mode. In the case of a two-stage power converter, this would include the semiconductor switch(es) of the DC/DC converter 2a and the semiconductor switches in the phase legs 38a, 38b and 38c of the DC/AC converter 2b. The DC switch 16 and the AC switch 28 are opened. Step 2 may represent a general protective measure that may be taken in response to any electric arc/short circuit fault in the solar power plant 1, for example.

The location of the electric arc within the solar power plant 1 may be known from the initial detection step (i.e., step 1). But if the location is not already known, the electric arc is discriminated in step 3 to determine its location within the solar power plant 1. In some cases, conventional protective measures may then be carried out to extinguish the electric arc and clear the short circuit fault. For the purposes of the following discussion, it will be assumed that the electric arc is located in the DC circuit 10, and in particular in the DC link 12 between the DC switch 16 and the DC bus 18 as indicated in Figure 1. The electric arc caused by the short circuit fault is across the air gap between the positive and negative DC rails of the DC link 12. An electric arc caused by a short circuit fault at this particular location in the DC link 12 may be difficult to extinguish using conventional protective measures for the reasons described above. The location of the electric arc may be determined by any suitable method, for example, using the current and voltage measurements provided to the controller 54 from the various sensors, power imbalances within the electrical system, e.g., between the PV panels 8 and the power converter 2, or using measurements of electric power conditions or environmental conditions, e.g., temperature, light etc., particularly within a housing or cubicle, that might indicate the existence of an electric arc and hence the location of the electric arc. For example, if currents are measured on both sides of the DC switch 16, i.e., by sensors 66 in the DC input strings 20a, 20b, ..., 20n or the sensors 68 in the combiner boxes 34a, 34b, ..., 34n on the PV panel-side of the DC switch and by sensor 60 in the DC link 12 (i.e., on the power converter-side of the DC switch) which provides a measurement of the DC link current, and there is a deviation in the current measurements, this might indicate that the short circuit fault causing the electric arc is on the PV panel-side of the DC switch. If there is no deviation in the current measurements on both sides of the DC switch 16, but spectral analysis of the DC link voltage (i.e., as measured by sensor 62) and/or the current measured by sensor 64 between the DC link 12 and ground shows high frequency components indicative of an electric arc, this might indicate that the short circuit fault causing the electric arc is on the power converter-side of the DC switch 6, for example.

At step 4, the method checks to see if the DC link voltage (U_{DC}) exceeds a voltage threshold (U_{TH}). The voltage threshold may be in the range between about 10 and about 100 VDC, for example. If the voltage threshold is not exceeded (i.e., U_{DC} < U_{TH}), the power converter 2 is transitioned from the converter off state to a short circuit state (step 5) as described in more detail below.

If the voltage threshold is exceeded (i.e., U_{DC} > U_{TH}) this indicates that the capacitors 14 in the DC link 12 are also charged up to the DC link voltage. This might typically be expected because the PV panels 8 were generating power and the DC switch 16 was closed prior to the electric arc being detected. If the power converter 2 was to be transitioned to the short circuit state, the capacitors 14 in the DC link 12 would also be short circuited and this would result in an unacceptably high short circuit current that could cause serious damage to the semiconductor switches. The capacitors 14 in the DC link 12 are therefore discharged (step 6), either passively through a discharge resistor (not shown) by waiting for a period of time, or actively by carrying out a suitable operation of the power converter, for example. Once the capacitors 14 are discharged and the voltage threshold is no longer exceeded (i.e., U_{DC} < U_{TH}), the power converter 2 may be safely transitioned to the short circuit state (step 5) and the DC switch 16 may be closed by the controller 40 (step 7) to place the short circuit current path(s) through the power converter - see below - in parallel with the electric arc.

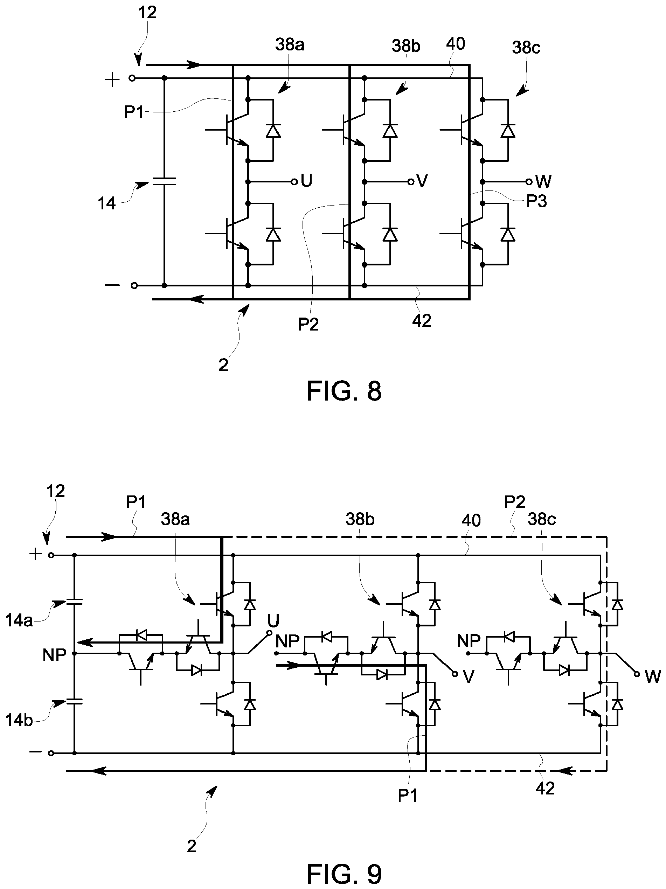

In the case where the power converter 2 is a single-stage power converter, i.e., the DC/AC converter as shown in Figures 3 and 4, the power converter is transitioned to the short circuit state by turning on certain semiconductor switches in one or more of the phase legs 38a, 38b and 38c to provide one or more short circuit current paths between the positive and negative DC rails 40, 42, and consequently between the DC input terminals 4 of the power converter 2. Figure 8 shows an arrangement for the two-level VSC topology shown in Figure 4 where both of the semiconductor switches in all three of the phase legs 3 8a, 38b and 38c are turned on at the same time to provide three parallel short circuit paths PI, P2 and P3 through the phase legs. However, it is also possible for both of the semiconductor switches in just one of the phase legs 38a, 38b, 38c to be turned on to provide a short circuit path through that phase leg while the other semiconductor switches are turned off. A short circuit path may be provided on a phase leg-by-phase leg basis if this is advantageous, e.g., to prevent overheating of the semiconductor devices. It will be understood that there should be no intermission between the short circuit paths because this would lead to the capacitors in the DC link 12 being charged. So if the semiconductor switches in the phase legs 38a, 38b and 38c are turned on in a phase leg-by-phase leg basis, for example, it is important that there is some overlap between the short circuit paths. Other ways of sequentially creating short circuit paths may also be utilised, for example creating two parallel short circuit paths through two of the phase legs at a time.

Figure 9 shows an arrangement for the three-level NPP VSC topology shown in Figure 5 where certain semiconductor switches in the first and second branches of the first phase leg 38a and certain semiconductor switches in the first and second branches of the second phase leg 38b are turned on to provide a short circuit path P1 between the first and second DC rails 40, 42 that goes via the intermediate DC point. A corresponding short circuit path could then be provided through the second and third phase legs 38b and 38c, then through the first and third phase legs 38a and 38c, and so on. For completeness, a second short circuit path P2 is shown where both of the semiconductor switches in the first branch of the third phase leg 38c are turned on. Other ways of sequentially creating short circuit paths through one or more of the phase legs, without intermission, may also be utilised.

In the case where the power converter 2 is a two-stage power converter as shown in Figures 5 and 6, the power converter is transitioned to the short circuit state by:
- turning on the semiconductor switch or certain semiconductor switches of the DC/DC converter 2a, and/or
- turning on certain semiconductor switches of at least one of the phase legs 38a, 38b and 38c of the DC/AC converter 2b,
to provide one or more short circuit current paths between the positive and negative DC rails 40, 42, and consequently between the DC input terminals 4 of the power converter 2.

In one arrangement, the power converter 2 may be transitioned to the short circuit state by initially turning on the semiconductor switch 44 of the DC/DC converter 2a shown in Figure 5 or by initially turning on the lower semiconductor switch in one or more of the branches 52a, 52b and 52c of the DC/DC converter 2a shown in Figure 6 such that one or more short circuit paths are provided initially through the DC/DC converter 2a only - see Figures 10 and 13 below. Normally, the power converter would only be transitioned to the short circuit state after the AC switch 28 has been opened. But in this case, the DC/DC converter 2a may be transitioned to the short circuit state before the AC switch 28 has been opened because the flyback diode 48 or the anti-parallel connected diode of the upper semiconductor device in the respective branch 52a, 52b and 52c of the DC/DC converter 2a provides a blocking or decoupling function. In particular, the DC/AC converter 2b is decoupled from the short circuit fault in the DC link 12 causing the electric arc. The short circuit path through the DC/DC converter 2a does not short the DC link between the DC/DC converter and DC/AC converter and inflowing fault currents from the AC power network or utility grid 32 are avoided. This is advantageous because the power converter 2 may start to divert short circuit current away from the electric arc before the AC switch 28 has been opened. The AC/DC converter 2b would remain in a converter off state (i.e., all of the semiconductor switches in the phase legs 38a, 38b and 38c would be turned off) and would continue to be connected to the AC power network or utility grid 32 until it is detected that the AC switch 28 has opened. After it has been detected that the AC switch 28 is open, the DC/AC converter 2b may be transitioned to the short circuit state by turning on certain semiconductor switches in one or more of the phase legs 38a, 38b and 38c to provide one or more short circuit current paths between the positive and negative DC rails 40, 42 - see Figures 11 and 14 below.

Figure 10 shows an arrangement where the semiconductor switch 44 is turned on to provide a short circuit path P1 through the DC/DC converter 2a. This could represent an arrangement where no short circuit path is provided through the DC/AC converter 2b, or the first step in the arrangement described above where a short circuit path is initially provided only through the DC/DC converter 2a while the DC/AC converter 2b remains in a converter off state until it is detected that the AC switch 28 is open.

Figure 11 shows an arrangement where the semiconductor switch 44 is turned on to provide a short circuit path P1 through the DC/DC converter 2a and both of the semiconductor switches in the first phase leg 38a of the DC/AC converter 2b are turned on to provide a short circuit path P2 through the DC/AC converter 2b. This could represent an arrangement where the short circuit paths PI, P2 are provided simultaneously through the DC/DC converter 2a and the DC/AC converter 2b, i.e., where the semiconductor switch 44 and the semiconductor switches in the first phase leg 38a are turned on at substantially the same time, or the second step in the arrangement described above where the short circuit path P2 is subsequently provided through the DC/AC converter 2b after it has been detected that the AC switch 28 is open, i.e., where the semiconductor switch 44 is turned on first and then the semiconductor switches in the first phase leg 38a are turned on at a later time.

Figure 12 shows an arrangement where the semiconductor switch 44 of the DC/DC converter 2a is turned off and where both of the semiconductor switches in all three of the phase legs 38a, 38b and 38c of the DC/AC converter 2b are turned on at the same time to provide three parallel short circuit paths PI, P2 and P3 through the phase legs. No short circuit path is provided through the DC/DC converter 2a.

Figure 13 shows an arrangement where the lower semiconductor switch in the first branch 52a is turned on to provide a short circuit path P1 through the DC/DC converter 2a. This could represent an arrangement where no short circuit path is provided through the DC/AC converter 2b, or the first step in the arrangement described above where a short circuit path is initially provided only through the DC/DC converter 2a while the DC/AC converter 2b remains in a converter off state until it is detected that the AC switch 28 is open. It will be understood that the upper anti-parallel connected diode in the first branch 52a provides a blocking or decoupling function as described above. It will also be understood that the lower semiconductor switch in the second branch 52b and/or the lower semiconductor switch in the third branch 52c may also be turned on to provide additional parallel short circuit paths through the DC/DC converter 2a if appropriate. Other ways of sequentially creating short circuit paths through one or more of the branches 52a, 52b and 52c of the DC/DC converter 2a, without intermission, may also be utilised.

Figure 14 shows an arrangement where the lower semiconductor switch in the first branch 52a is turned on to provide a short circuit path P1 through the DC/DC converter 2a and where both of the semiconductor switches in the first phase leg 38a of the DC/AC converter 2b are turned on to provide a short circuit path P2 through the DC/AC converter 2b. This could represent an arrangement where the short circuit paths PI, P2 are provided simultaneously through the DC/DC converter 2a and the DC/AC converter 2b, i.e., where the lower semiconductor switch in the first branch 52a and the semiconductor switches in the first phase leg 3 8a are turned on at substantially the same time, or the second step in the arrangement described above where the short circuit path P2 is subsequently provided through the DC/AC converter 2b after it has been detected that the AC switch 28 is open, i.e., where the lower semiconductor switch in the first branch 52a is turned on first and then the semiconductor switches in the first phase leg 38a are turned on at a later time. Other ways of sequentially creating short circuit paths through one or more of the branches 52a, 52b and 52c of the DC/DC converter 2a and/or one or more of the phase legs 38a, 38b and 38c of the DC/AC converter 2b, without intermission, may also be utilised.

It will be readily understood that the arrangements shown in Figures 8 to 14 are only intended to show a range of different short circuit states for the power converter 2 and that other short circuit states are possible. For the purposes of the present invention, the critical feature is that at least one short circuit path is provided through the power converter when the short circuit state is enabled so that there is a short circuit between its DC input terminals.

The PV panels 8 are now short circuited at two parallel locations - namely by the electric arc caused by the short circuit fault in the DC link 12 and the deliberately-created short circuit current path(s) through the power converter 2. The short circuit current is therefore diverted away from the electric arc and through the power converter 2, which eventually results in the electric arc being extinguished.

At step 8, the method determines if the electric arc has been extinguished. For example, the methods used for electric arc detection may also be used to determine when the electric arc has been extinguished.

For example, if there is no longer a deviation in the currents measured on both sides of the DC switch 16, i.e., by sensors 66 in the DC input strings 20a, 20b, ..., 20n or the sensors 68 in the combiner boxes 34a, 34b, ..., 34n on the PV panel-side of the DC switch and by sensor 60 in the DC link 12 (i.e., on the power converter-side of the DC switch) which provides a measurement of the DC link current, this might indicate that the electric arc on the PV panel-side of the DC switch has been extinguished. If spectral analysis of the DC link voltage (i.e., as measured by sensor 62) and/or the current measured by sensor 64 between the DC link 12 and ground no longer shows high frequency components indicative of an electric arc, this might indicate that electric arc on the power converter-side of the DC switch 16 has been extinguished. Measurements of environmental conditions, e.g., temperature, light etc., particularly within a housing or cubicle, may indicate when the electric arc has been extinguished. For example, sensors might detect a sudden decrease in light intensity or temperature when the electric arc is extinguished.

If the electric arc has been extinguished, the short circuit state of the power converter 2 is disabled (step 9). For example, the power converter 2 is transitioned to the converter off state where it remains enabled, but all of the semiconductor switches are turned off or are in a blocking mode, or transitioned to another state.

At step 10, the method determines if the short circuit fault has been cleared. For example, the short circuit fault may have been cleared if the DC link voltage increases after the short circuit state of the power converter 2 is disabled. If the short circuit fault has cleared, the automatic re-start of the power converter 2 may be attempted, for example, and normal operation may eventually be resumed (step 11).

If the short circuit fault has not cleared, the DC switch 16 is opened (step 12) and the DC circuit 10 may be repaired (step 13).

## Claims

1. A method of controlling an electrical system, comprising:
a direct current DC power source (8); and
a power converter (2) including at least one controllable semiconductor device, each semiconductor device including at least a controllable semiconductor switch, the power converter (2) having DC input terminals (4) connected to the DC power source (8) by means of a DC circuit (10);
wherein the method comprises the step of:
in response to a detected electric arc on the DC side of the power converter (2), enabling a short circuit state of the power converter (2) by controlling the at least one semiconductor switch of the power converter (2) to create a short circuit between the DC input terminals (4).

2. A method according to claim 1, further comprising the step of maintaining the short circuit state of the power converter (2) for a period of time, or at least until the detected electric arc is extinguished.

3. A method according to any preceding claim, wherein the power converter (2) is initially in a converter on state and in response to the detected electric arc is (i) transitioned directly from the converter on state to the short circuit state, or (ii) transitioned from the converter on state to a converter off state and then from the converter off state to the short circuit state.

4. A method according to any preceding claim, wherein the power converter comprises an DC/AC converter (2; 2b) having at least one AC terminal (6) and a plurality of phase legs (38a, 38b, 38c), and wherein during the short circuit state, semiconductor switches of at least one phase leg (38a, 38b, 38c) are controlled to turn on so that a short circuit current flows between the DC input terminals (4) of the power converter.

5. A method according to claim 4, wherein the electrical system includes an AC circuit (24) connected to the AC terminal(s) (6) of the DC/AC converter (2; 2b) and connectable to an AC power network or utility grid (32), wherein the AC circuit (24) includes an AC switch (28), and wherein the method further comprises the step of opening the AC switch (28) before the power converter (2) is transitioned to the short circuit state.

6. A method according to claim 5, wherein the power converter (2) further comprises a DC/DC converter (2a), and wherein during the short circuit state, at least one semiconductor switch (44) of the DC/DC converter (2a) is controlled to turn on so that a short circuit current flows between the DC input terminals (4) of the power converter (2).

7. A method according to claim 6, wherein the short circuit state of the DC/AC converter is enabled after the short circuit state of the DC/DC converter is enabled, and optionally after it has been detected that the AC switch (28) is open.

8. A method according to any preceding claim, wherein the DC circuit (10) includes a DC link (12) with a DC switch (16), and wherein the method further comprises the step of opening the DC switch (16) before the power converter (2) is transitioned to the short circuit state.

9. A method according to claim 8, wherein, with the DC switch (16) open, the method further comprises the steps of:
if the DC link voltage exceeds a voltage threshold:
discharging the DC link (12) until the DC link voltage does not exceed the voltage threshold, and
transitioning the power converter (2) to the short circuit state.

10. A method according to claim 8 or claim 9, further comprising the step of closing the DC switch (16) after the power converter (2) has been transitioned to the short circuit state, and optionally the step of opening the DC switch (16) after the short circuit state has been disabled.

11. An electrical system comprising:
a DC power source (8);
a power converter (2) including at least one controllable semiconductor device, each semiconductor device including at least a controllable semiconductor switch, the power converter (2) having DC input terminals (4) connected to the DC power source (8) by means of a DC circuit (10); and
a controller (54);
wherein the controller (54) is configured to:
in response to a detected electric arc on the DC side of the power converter (2), enable a short circuit state of the power converter (2) by controlling the at least one semiconductor switch of the power converter (2) to create a short circuit between the DC input terminals (4).

12. An electrical system according to claim 11, wherein the controller (54) is further configured to maintain the short circuit state of the power converter (2) for a period of time, or at least until the detected electric arc is extinguished.

13. An electrical system according to claim 11 or claim 12, wherein the power converter comprises a DC/AC converter (2; 2b) having at least one AC terminal (6) and optionally a DC/DC converter (2a).

14. An electrical system according to claim 13, wherein the DC circuit (10) includes a DC link (12) with a DC switch (16), and wherein the electrical system further comprises an AC circuit (24) connected to the AC output terminal(s) (6) of the DC/AC converter (2; 2b) and connectable to an AC power network or utility grid (32).

15. A solar power plant (1) comprising the electrical system according to any of claims 11 to 14, wherein the DC power source comprises one or more photovoltaic PV panels (8; 8a, 8b, ..., 8n).
